# EUROPÄISCHE PATENTANMELDUNG

(11) **EP 4 826 580 A1**
(43) Veröffentlichungstag der Anmeldung: **21.10.2026**
(21) Anmeldenummer: 25207301.0
(22) Anmeldetag: 07.10.2025
(51) Int. Cl.: G06F 21/53, G06F 21/12, G06F 21/14

(54) **VERFAHREN UND VORRICHTUNG ZUM SCHUTZ VOR BEEINFLUSSUNGEN EINES PROGRAMMS MIT MASSNAHMEN ZUM UNTERBINDEN VON AUSLESEN VON INSTRUKTIONEN**

(30) Priorität: 15.04.2025 EP 25170718; 15.04.2025 EP 25170719; 15.04.2025 EP 25170720
(71) Anmelder: Wibu-Systems AG, 76137 Karlsruhe (DE)
(72) Erfinder: Engelmann, Axel, 76137 Karlsruhe (DE); Heumann, Maurice, 76137 Karlsruhe (DE)
(74) Vertreter: Durm Patentanwälte PartG mbB

(57) **Zusammenfassung**

Eine Vorrichtung (10) und ein Verfahren zum Schutz vor Beeinflussungen eines Programms umfassen das Identifizieren einer auslagerungsfähigen Codesequenz in einer Funktion des Programms, das Erstellen eines Extraktionsmoduls mit der Codesequenz als Teilfunktion der Funktion, das Erstellen eines Funktionsrumpfs ohne die Codesequenz, wobei das Extraktionsmodul im Funktionsrumpf mit Parametern aufgerufen wird, die auf Variablen der Funktion oder auf globalen Variablen des Programms basieren. Das Verfahren umfasst weiterhin das Ausführen der Teilfunktion im Extraktionsmodul basierend auf den Parametern, wobei die Teilfunktion Ausgabeparameter an den Funktionsrumpf zurückgibt, und das Zuordnen der zurückgegebenen Ausgabeparameter zu Ergebniswerten des Funktionsrumpfs. Die Ergebniswerte des Funktionsrumpfs rufen das gleiche Ergebnis hervor wie die ursprüngliche Funktion.

## Beschreibung

Die vorliegende Erfindung betrifft das Gebiet der Softwaresicherheit, insbesondere Verfahren und Systeme zum Schutz von Programmen vor unbefugtem Auslesen und Manipulation zur Laufzeit. Die Erfindung stellt ein Verfahren bereit, bei dem auslagerungsfähige Codesequenzen in Programmfunktionen identifiziert und in separate Extraktionsmodule ausgelagert werden.

Der Stand der Technik umfasst verschiedene Ansätze zum Schutz von Softwareprogrammen vor unbefugtem Zugriff und Manipulation. Einige bekannte Methoden umfassen Obfuskation, bei der der Programmcode absichtlich schwer lesbar gemacht wird, sowie Verschlüsselung von Programmteilen. Andere Techniken konzentrieren sich auf die Verhinderung von Debugging und Reverse-Engineering, indem sie Anti-Debugging-Mechanismen implementieren oder den Code in geschützten Speicherbereichen ausführen. Es gibt auch Ansätze, die auf der Virtualisierung des Codes basieren, wobei Teile des Programms in einer virtuellen Umgebung ausgeführt werden. Trotz dieser Methoden bleiben viele Programme anfällig für Angriffe, insbesondere wenn Angreifer direkten Zugriff auf den Arbeitsspeicher haben.

Das Dokument WO 2015/128301 A1 beschreibt ein Verfahren zum Schutz eines Computerprogramms gegen Beeinflussung, das auf dem Kerckhoffs'schen Prinzip beruht. Es verwendet das Auslagern von Programmteilen und einen sicheren Schlüsselspeicher. Das Verfahren fokussiert sich auf die Verschlüsselung der ausgelagerten Teile des Programms und die Verwendung von redundanten Programmbausteinen.

Das Dokument EP 2 525 301 A1 offenbart eine Methode zum Schutz von Softwarecodes durch selektive Verschlüsselung von Funktionskörpern, während die Funktionsköpfe unverändert bleiben.

Das Dokument US 2009/0049425 A1 stellt ein Verfahren zur Obfuskation von ausführbarem Computercode vor, die Codefragmente relokiert und durch Aufrufe ersetzt. Diese Methode zielt primär auf die Erschwerung des Reverse Engineering ab und bietet keine Lösung für die sichere Ausführung kritischer Codeabschnitte in einer geschützten Umgebung.

Das Dokument US 2006/0031686 A1 beschreibt ein Verfahren zum Schutz von Anwendungssoftware durch Installation von "Guards" und Code-Obfuskation.

In bestehenden Technologien zur Softwaresicherheit, wie beispielsweise Thales "AppOnChip", ist die Extraktion von Codesequenzen auf einfache, seiteneffektfreie Instruktionsfolgen beschränkt. Typischerweise werden kurze Sequenzen arithmetischer Operationen, die ausschließlich auf Registern arbeiten, extrahiert. Bei der Ausführung werden die Registerinhalte in einen Eingabekontext übertragen, die Instruktionen in einer sicheren Umgebung (Vertrauensanker) ausgeführt und anschließend der aktualisierte Registerkontext zurück an den Hauptrechner übermittelt und mit der CPU synchronisiert.

Diese Art von seiteneffektfreien Instruktionssequenzen ist in modernen Programmen jedoch selten in längerer Form anzutreffen. Zudem können sie oft durch eine Analyse der Ein- und Ausgabewerte relativ leicht rekonstruiert werden, was ihre Schutzwirkung deutlich mindert.

Um dennoch einen gewissen Schutz zu erreichen, extrahieren aktuelle Lösungen eine Vielzahl solcher kurzen Sequenzen von in der Regel weniger als 10 Codezeilen. Dies führt allerdings zu einem erheblichen Leistungsaufwand, der hauptsächlich durch die häufige Kommunikation mit dem externen Vertrauensanker verursacht wird. Infolgedessen wird die praktische Anwendbarkeit derartiger Methoden eingeschränkt, was wiederum das erreichbare Sicherheitsniveau begrenzt.

Trotz dieser bekannten Ansätze besteht weiterhin das Problem, dass Angreifer mit Zugriff auf den Arbeitsspeicher eines Prozessors kritische Programmteile zur Laufzeit auslesen und manipulieren können.

Es stellt sich daher die Aufgabe, ein verbessertes Verfahren zum Schutz vor Beeinflussungen eines Programms bereitzustellen, das das unbefugte Auslesen von Instruktionen des geschützten Programms zur Laufzeit aus einem Arbeitsspeicher eines Prozessors wirksam unterbindet.

Gelöst wird die Aufgabe mit einem Verfahren mit den Merkmalen des Anspruchs 1, einer Vorrichtung mit den Merkmalen des Anspruchs 14 und mit einem System mit den Merkmalen des Anspruchs 18.

Die vorliegende Erfindung adressiert die Herausforderungen im Stand der Technik, indem sie einen neuartigen Ansatz zur Codeextraktion und -isolation vorschlägt, der das unberechtigte Auslesen von Programminstruktionen zur Laufzeit erschwert.

Gemäß einem ersten Aspekt betrifft die vorliegende Erfindung ein Verfahren zum Schutz vor Beeinflussungen eines Programms, das Maßnahmen zum Unterbinden des Auslesens von Programminstruktionen zur Laufzeit aus einem Arbeitsspeicher umfasst. Das Verfahren umfasst das Identifizieren auslagerungsfähiger Codesequenzen in Programmfunktionen, das Erstellen von Extraktionsmodulen mit diesen Codesequenzen, die eine Teilfunktion der Funktion umfassen und das Erstellen eines Funktionsrumpfs, der die ursprünglichen Codesequenzen ausschließt. Der Funktionsrumpf ruft die Extraktionsmodule mit entsprechenden Parametern auf. Die Teilfunktionen in den Extraktionsmodulen werden basierend auf den übergebenen Parametern ausgeführt und geben Ausgabeparameter an die Funktionsrümpfe zurück, wobei die funktionale Äquivalenz des Programms erhalten bleibt. Bevorzugt wird der Funktionsrumpf zunächst durch die Extraktion der Codesequenzen gebildet, ohne weitere Maßnahmen. Er wird dann durch die geeigneten Aufrufe und Parameter sowie deren Übergabe erweitert.

Gemäß einem weiteren Aspekt betrifft die vorliegende Erfindung eine Vorrichtung zum Schutz vor den obengenannten Beeinflussungen eines Programms zur Laufzeit aus einem Arbeitsspeicher eines Prozessors. Die Vorrichtung umfasst einen Speicher, der bevorzugt das Programm umfasst, und eine Prozessoreinheit mit Arbeitsspeicher und Prozessor. Die Vorrichtung ist dazu ausgebildet, das oben beschriebene Verfahren auszuführen.

Bevorzugt ist die Vorrichtung also dazu ausgebildet, auslagerungsfähige Codesequenzen in Funktionen des Programms zu identifizieren, Extraktionsmodule mit diesen Codesequenzen zu generieren und Funktionsrümpfe ohne die ursprünglichen Codesequenzen zu erstellen. Diese Funktionsrümpfe rufen die Extraktionsmodule mit entsprechenden Parametern auf, die auf Variablen der Funktion oder auf globalen Variablen des Programms basieren. Die Teilfunktionen werden in den Extraktionsmodulen ausgeführt, was in einer, bevorzugt sicheren, Ausführungsumgebung erfolgt, wobei die Teilfunktionen Ausgabeparameter an die Funktionsrümpfe zurückgeben. Die Vorrichtung ordnet die zurückgegebenen Ausgabeparameter den Ergebniswerten der Funktionsrümpfe zu, sodass die funktionale Äquivalenz des Programms erhalten bleibt, während das unbefugte Auslesen von Programminstruktionen aus dem Arbeitsspeicher erheblich erschwert wird.

Gemäß einem weiteren Aspekt betrifft die vorliegende Erfindung ein System zum Schutz vor Beeinflussungen eines Programms mit Maßnahmen zum Unterbinden von Auslesen von Instruktionen zur Laufzeit aus einem Arbeitsspeicher eines Prozessors. Das System umfasst die oben genannte Vorrichtung und ein Secure-Element zum Ausführen von Extraktionsmodulen. Durch diese Aufteilung und Isolation von Programmcode wird das unbefugte Auslesen von Programminstruktionen aus dem Arbeitsspeicher eines Prozessors während der Programmausführung erheblich erschwert, während die funktionale Äquivalenz des Programms erhalten bleibt.

Die Extraktionsmodule umfassen ausgelagerte Codesequenzen mit Teilfunktionen des Programms. Der Prozessor identifiziert auslagerungsfähige Codesequenzen, erstellt Extraktionsmodule und ersetzt die ursprünglichen Codesequenzen durch Funktionsrümpfe, die die Extraktionsmodule mit entsprechenden Parametern aufrufen.

Das Secure-Element führt die Extraktionsmodule aus und gibt Ausgabeparameter zurück. Das System ordnet diese den Ergebniswerten der Funktionsrümpfe zu, wodurch die funktionale Äquivalenz erhalten bleibt, während das unbefugte Auslesen von Programminstruktionen erschwert wird.

Weitere Aspekte der Erfindung betreffen ein dem Verfahren entsprechendes Computerprogrammprodukt mit Programmcode zum Durchführen der Schritte des Verfahrens, wenn der Programmcode auf einem Computer ausgeführt wird, sowie ein Speichermedium, auf dem ein Computerprogramm gespeichert ist, das, wenn es auf einem Computer ausgeführt wird, eine Ausführung des hierin beschriebenen Verfahrens bewirkt.

Die vorliegende Erfindung bietet mehrere bedeutende Vorteile gegenüber dem Stand der Technik:
1. Verbesserte Sicherheit durch Code-Isolation:
   Im Gegensatz zu herkömmlichen Obfuskations- oder Verschlüsselungstechniken identifiziert das Verfahren gezielt auslagerungsfähige Codesequenzen und lagert diese in separate Extraktionsmodule aus. Dies erschwert das unbefugte Auslesen von Programminstruktionen aus dem Arbeitsspeicher erheblich, da kritische Codeabschnitte nicht mehr im Hauptprogramm vorliegen.
2. Erhaltung der funktionalen Äquivalenz:
   Anders als bei vielen Obfuskationstechniken, die die Lesbarkeit und Wartbarkeit des Codes beeinträchtigen können, bleibt bei diesem Ansatz die funktionale Äquivalenz des Programms vollständig erhalten. Die Extraktionsmodule werden so aufgerufen und ausgeführt, dass das Programmverhalten unverändert bleibt.
3. Dynamische Sicherheit durch Secure-Element:
   Das System nutzt ein Secure-Element zur Ausführung der Extraktionsmodule. Dies bietet eine zusätzliche Sicherheitsebene, die über statische Schutzmechanismen hinausgeht und eine sichere Ausführungsumgebung für kritische Codeabschnitte bereitstellt. Optional kann auch die Vorrichtung ein Secure-Element verwenden.
4. Flexibilität und Anpassungsfähigkeit:
   Das Verfahren ermöglicht eine flexible Identifizierung und Auslagerung von Codesequenzen. Dies erlaubt eine gezielte Anpassung des Schutzniveaus für verschiedene Teile des Programms, was bei vielen bestehenden Lösungen nicht möglich ist.
5. Reduzierte Angriffsfläche:
   Durch die Auslagerung kritischer Codeabschnitte in Extraktionsmodule und deren Ausführung in einem Secure-Element wird die im Hauptspeicher sichtbare Angriffsfläche des Programms deutlich reduziert. Dies bietet einen effektiveren Schutz gegen Speicheranalyse-Angriffe als viele herkömmliche Methoden.
6. Kompatibilität mit bestehenden Sicherheitsmaßnahmen:
   Das vorgestellte Verfahren kann komplementär zu anderen Sicherheitstechniken wie Verschlüsselung oder Anti-Debugging-Mechanismen eingesetzt werden, was eine mehrschichtige Sicherheitsarchitektur ermöglicht. Beispielsweise können die ausgelagerten Codesequenzen bevorzugt verschlüsselt sein.

Diese Vorteile adressieren direkt die im Stand der Technik identifizierten Schwachstellen und bieten eine innovative Lösung für die anhaltende Herausforderung des Schutzes von Softwareprogrammen vor unbefugtem Zugriff und Manipulation.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das Verfahren und das Computerprogrammprodukt entsprechend der für die Vorrichtung und das System in den abhängigen Ansprüchen beschriebenen Ausgestaltungen ausgeführt sein sowie vice versa.

In einer bevorzugten Ausgestaltung der Erfindung werden globale Variablen identifiziert, die ausschließlich in der Funktion und/oder der Codesequenz im Extraktionsmodul verwendet werden. Datenabhängigkeiten innerhalb der Funktion des Programms werden durch Definieren geeigneter lokaler Variablen aufgelöst. Die erkannten globalen Variablen werden den lokalen Variablen zugeordnet. Dies bietet den Vorteil einer verbesserten Kapselung und reduziert potenzielle Seiteneffekte, die durch globale Variablen verursacht werden könnten.

Vorzugsweise werden lokale Variablen erstellt, die den identifizierten globalen Variablen entsprechen, und Verweise auf die globalen Variablen werden innerhalb des Extraktionsmoduls durch Verweise auf die entsprechenden lokalen Variablen ersetzt. Diese Maßnahme erhöht die Modularität des Codes und erleichtert die Wartung und Analyse der ausgelagerten Codesequenzen für den Entwickler des zu schützenden Programms.

In einer weiteren bevorzugten Ausführungsform des Verfahrens werden ausnahme-erzeugende Anweisungen in der Codesequenz identifiziert und durch Kontrollflussvarianten ersetzt. Eine entsprechende Ausnahmebehandlung wird im Funktionsrumpf implementiert. Dieser Ansatz verbessert die Robustheit des Programms und ermöglicht eine zentralisierte Fehlerbehandlung im Hauptprogramm.

Bevorzugt werden Seiteneffekte in der Codesequenz identifiziert und ein Kontrollflusskonstrukt erzeugt, dessen Eingabewerte auf mindestens einem Ausgabeparameter des Extraktionsmoduls basieren. Das Extraktionsmodul umfasst eine Auswahlfunktion, die die Seiteneffekte repräsentiert, und das Kontrollflusskonstrukt bildet unterschiedliche Fälle der Seiteneffekte ab. Dieses bevorzugt automatisierte Vorgehen ermöglicht eine präzise Kontrolle über potenzielle Seiteneffekte und erschwert die Vorhersagbarkeit des Programmverhaltens. Gleichzeitig werden alle möglichen Auswirkungen von Seiteneffekten berücksichtigt, ohne dass ein Angreifer hieraus Rückschlüsse auf den Programmablauf oder die Programmstruktur schließen kann.

In einer weiteren bevorzugten Ausführungsform des Verfahrens werden als Seiteneffekte die Behandlung von arithmetischen Ausnahmen, das Lesen und Schreiben globaler Variablen, das Aufrufen von Funktionen, die eine Ausnahme auslösen, wie eine No-return-Funktion, das Erzeugen von Datenzugriffen auf Speicher, das Hervorrufen von Prozessorinterrupts, das Verzweigen in andere Funktionen oder das Springen mit dynamischen Sprungzielen abgebildet, also berücksichtigt.

In einer weiteren bevorzugten Ausgestaltung der Erfindung werden die Seiteneffekte in den Funktionsrumpf verschoben. Dies zentralisiert die Verwaltung von Seiteneffekten und erleichtert deren Überwachung und Kontrolle. Die Auswirkungen der Seiteneffekte werden im Funktionsrumpf behandelt. Allerdings bleiben die Seiteneffekte selbst und die Bedingungen, die zum Ausführen der Seiteneffekte führen in dem Extraktionsmodul verborgen. Da das Extraktionsmodul bevorzugt in dem Secure-Element ausgeführt wird, hat ein Angreifer keinen Zugriff darauf, was eine Analyse stark erschwert.

Vorzugsweise wird eine Parameterstruktur zum Übergeben von Daten zwischen dem Funktionsrumpf und dem Extraktionsmodul erstellt. Diese Struktur umfasst Eingabeparameter, die den Zustand von Variablen der Funktion oder globaler Variablen vor der Ausführung des Extraktionsmoduls repräsentieren, sowie Ausgabeparameter zum Zurückgeben modifizierter lokaler Variablen nach der Ausführung des Extraktionsmoduls. Dieser Ansatz verbessert die Datenkapselung und erleichtert den Informationsaustausch zwischen den isolierten Codeabschnitten.

Zudem können bevorzugt das Verändern der an das Extraktionsmodul übergebenen Eingabeparameter entsprechend der Teilfunktion in dem Extraktionsmodul und das Erzeugen von Ausgabeparametern basierend auf der Teilfunktion in dem Extraktionsmodul vor dem Zurückgeben der Ausgabeparameter an den Funktionsrumpf erfolgen.

Das Zuordnen von Variablen der Funktion oder globalen Variablen des Programms an lokale Variablen kann bevorzugt derart erfolgen, dass die Variablen der Funktion oder globale Variablen innerhalb des Extraktionsmoduls unverändert bleiben oder nicht verarbeitet werden. Somit bietet auch ein Überwachen der globalen Variablen oder der Variablen der Funktion keine Möglichkeit, Rückschlüsse auf die ausgeführte Funktion zu erhalten.

Vorzugsweise können die lokalen Variablen als Eingabeparameter an das Extraktionsmodul übergeben werden und in dem Extraktionsmodul nur die lokalen Variablen verändert werden und die Variablen der Funktion oder die globalen Variablen unverändert bleiben.

In einer bevorzugten Ausführungsform werden mehrere Codesequenzen aus einer einzelnen Funktion extrahiert und mehrere Extraktionsmodule für die einzelne Funktion erstellt. Dies ermöglicht eine feinere Granularität der Code-Isolation und erhöht die Flexibilität des Schutzmechanismus.

Bevorzugt werden Variablen der Funktion oder globale Variablen des Programms lokalen Variablen so zugeordnet, dass sie innerhalb des Extraktionsmoduls unverändert bleiben oder nicht verarbeitet werden. Dies minimiert unbeabsichtigte Änderungen an kritischen Programmzuständen und erhöht die Sicherheit der ausgelagerten Codeabschnitte.

In einer weiteren bevorzugten Ausgestaltung werden die Ausgabeparameter an die Originaldatenbereiche zurückgegeben. Alternativ können die Variablen der Funktion oder globale Variablen nach Aufruf des Extraktionsmoduls mit einzelnen Ausgabeparametern des Extraktionsmoduls überschrieben werden. Beide Ansätze gewährleisten die korrekte Aktualisierung des Programmzustands nach der Ausführung der isolierten Codesequenzen.

Vorzugsweise wird das Extraktionsmodul in einem Secure-Element, einem sicheren Element, einem Vertrauensanker oder in einem sicheren Bereich des Prozessors ausgeführt, der bevorzugt von außen unzugänglich ist. Dies sind sichere Ausführungsumgebungen, die auch extern lokalisiert sein können, beispielsweise in einem externen Speicher oder Cloudspeicher, der bevorzugt über eine gesicherte (oder auch dedizierte) Verbindung angesprochen wird. Diese sicheren Ausführungsumgebungen bieten eine zusätzliche Sicherheitsebene und schützen die ausgelagerten Codesequenzen vor unbefugtem Zugriff und Manipulation.

In einer bevorzugten Ausgestaltung der Erfindung umfasst die Vorrichtung einen Codesequenzgenerator zum Identifizieren auslagerungsfähiger Codesequenzen in Funktionen des Programms. Dies ermöglicht eine automatisierte und effiziente Erkennung von Codeabschnitten, die für die Auslagerung geeignet sind, was den Prozess der Code-Isolation beschleunigt und optimiert.

Vorzugsweise beinhaltet die Vorrichtung einen Extraktionsmodulgenerator zum Erstellen von Extraktionsmodulen, die die identifizierten Codesequenzen mit Teilfunktionen der ursprünglichen Funktionen umfassen. Dieser Ansatz gewährleistet, dass die ausgelagerten Codeabschnitte in einer strukturierten und wiederverwendbaren Form vorliegen, was die Wartbarkeit und Skalierbarkeit des Systems verbessert.

In einer weiteren bevorzugten Ausführungsform der Vorrichtung ist ein Funktionsmodifikator vorgesehen, der Funktionsrümpfe ohne die ausgelagerten Codesequenzen erstellt. Die Funktionsrümpfe rufen die Extraktionsmodule mit Eingangsparametern auf, die auf Variablen der Funktion oder auf globalen Variablen des Programms basieren. Dadurch wird eine nahtlose Integration der ausgelagerten Codeabschnitte in den Programmablauf sichergestellt, ohne die Funktionalität zu beeinträchtigen.

Bevorzugt umfasst die Vorrichtung eine Ausführungsumgebung zum Ausführen der Teilfunktionen in den Extraktionsmodulen basierend auf den Eingangsparametern. Diese Ausführungsumgebung ermöglicht eine kontrollierte und sichere Ausführung der isolierten Codeabschnitte, was die Integrität und Vertraulichkeit des Programms erhöht. Sie ist bevorzugt eine sichere Ausführungsumgebung.

In einer weiteren vorteilhaften Ausgestaltung der Erfindung ist ein Parameterzuordner vorgesehen, der die zurückgegebenen Ausgabeparameter der Extraktionsmodule den Ergebniswerten der Funktionsrümpfe zuordnet. Dies gewährleistet, dass die Ergebnisse der ausgelagerten Codeabschnitte korrekt in den Hauptprogrammablauf integriert werden, wodurch die funktionale Äquivalenz des Programms erhalten bleibt.

Vorzugsweise ist die Ausführungsumgebung in dem Secure-Element implementiert, um die Extraktionsmodule auszuführen. Diese Maßnahme bietet eine zusätzliche Sicherheitsebene, indem sie die ausgelagerten Codeabschnitte in einer geschützten Umgebung ausführt, die vor unbefugtem Zugriff und Manipulation geschützt ist.

In einer bevorzugten Ausführungsform umfasst die Vorrichtung einen Codesequenzgenerator, Extraktionsmodulgenerator, Funktionsmodifikator, eine Ausführungsumgebung und einen Parameterzuordner. Der Codesequenzgenerator identifiziert eine auslagerungsfähige Codesequenz in einer Funktion des Programms; der Extraktionsmodulgenerator erstellt ein Extraktionsmodul, das die Codesequenz mit einer Teilfunktion der Funktion umfasst. Der Funktionsmodifikator erstellt einen Funktionsrumpf ohne die Codesequenz, wobei das Extraktionsmodul in dem Funktionsrumpf mit Eingangsparametern aufgerufen wird, die auf Variablen der Funktion oder auf globalen Variablen des Programms basieren. Eine Ausführungsumgebung, die bevorzugt eine sichere Umgebung ist, ermöglicht das Ausführen der Teilfunktion in dem Extraktionsmodul basierend auf den Eingabeparametern, wobei die Teilfunktion Ausgabeparameter an den Funktionsrumpf zurückgibt. Der Parameterzuordner ordnet die zurückgegebenen Ausgabeparameter des Extraktionsmoduls zu Ergebniswerten des Funktionsrumpfs zu. Diese Komponenten ermöglichen die Identifikation, Extraktion und Ausführung von Codesequenzen sowie die Zuordnung von Parametern, wobei die Ergebnisse des Funktionsrumpfs denen der ursprünglichen Funktion entsprechen. Die spezialisierten Komponenten ermöglichen eine effiziente und automatisierte Umsetzung des Verfahrens, was die Anwendbarkeit und Skalierbarkeit der Lösung verbessert.

Vorzugsweise hat die Vorrichtung einen Seiteneffektmanager zum Verlagern von Seiteneffekten aus der identifizierten Codesequenz. Er identifiziert globale Variablen oder Variablen der Funktion, erstellt entsprechende lokale Variablen und ersetzt Verweise innerhalb des Extraktionsmoduls. Durch die Verlagerung von Seiteneffekten wird die Isolation der ausgelagerten Codesequenzen verbessert, was die Sicherheit und Robustheit des Schutzmechanismus erhöht.

Weiter bevorzugt identifiziert der Seiteneffektmanager zusätzlich ausnahme-erzeugende Anweisungen, ersetzt diese durch Kontrollflussvarianten und implementiert entsprechende Ausnahmebehandlungen im Funktionsrumpf. Diese Erweiterung ermöglicht eine umfassendere Behandlung von komplexen Programmstrukturen und erhöht die Anwendbarkeit des Schutzverfahrens auf ein breiteres Spektrum von Softwareprogrammen.

Das System gemäß der Erfindung umfasst die oben beschriebene Vorrichtung und ein Secure-Element zur Ausführung des Extraktionsmoduls mit einer ausgelagerten Codesequenz. Durch die Kombination der Vorrichtung mit einem dedizierten Secure-Element wird ein ganzheitlicher Schutzansatz realisiert, der sowohl die Extraktion als auch die sichere Ausführung kritischer Codeabschnitte abdeckt.

In einer besonders bevorzugten Ausführungsform des Systems ist das Secure-Element in dem Prozessor integriert, über eine Schnittstelle mit der Vorrichtung verbunden oder in einer externen Recheneinheit oder Speichereinheit ausgebildet, die in der Cloud verwirklicht sein kann. Diese Flexibilität in der Implementierung des Secure-Elements ermöglicht eine Anpassung an verschiedene Systemarchitekturen und Sicherheitsanforderungen, was die Einsatzmöglichkeiten der Erfindung erweitert und ihre Anwendbarkeit in unterschiedlichen Umgebungen sicherstellt.

In einer bevorzugten Ausführung umfasst das System einen Codesequenz-Extraktor, der Funktionen für die Extraktion basierend auf einem Klassifikationswert auswählt. Dieser Wert basiert auf Kriterien wie zyklomatische Komplexität, Anzahl der Anweisungen, Menge an konstanten Daten, Anzahl der Grundblöcke oder Funktionsname. Die intelligente Auswahl von Funktionen für die Extraktion erreicht eine optimale Balance zwischen Schutzwirkung und Systemperformance, was die Effizienz und Effektivität des Schutzverfahrens steigert.

Das Verfahren zum Schutz vor Beeinflussungen umfasst die Identifizierung auslagerungsfähiger Codesequenzen in Programmfunktionen, die Erstellung von Extraktionsmodulen mit diesen Codesequenzen und das Ersetzen der ursprünglichen Codesequenzen durch Funktionsrümpfe, die die Extraktionsmodule mit entsprechenden Parametern aufrufen.

Die Erfindung adressiert somit das Problem, dass bestehende Schutzmechanismen für Softwareprogramme oft entweder die Funktionalität beeinträchtigen, die Wartbarkeit erschweren oder keine ausreichende Sicherheit gegen fortgeschrittene Angriffsmethoden bieten. Insbesondere löst die Erfindung das Problem, wie man kritische Codeabschnitte effektiv vor unbefugtem Auslesen und Manipulation schützen kann, ohne die Gesamtfunktionalität des Programms zu beeinträchtigen oder die Ausführungsgeschwindigkeit signifikant zu reduzieren. Durch die gezielte Identifikation und Auslagerung von Codesequenzen in Extraktionsmodule, die bevorzugt in einem Secure-Element ausgeführt werden, bietet die Erfindung einen neuartigen Ansatz, der sowohl hohe Sicherheit als auch Erhaltung der Funktionalität und Wartbarkeit gewährleistet.

Ein Vorteil der Erfindung liegt in der verbesserten Sicherheit durch Code-Isolation. Im Gegensatz zu herkömmlichen Obfuskations- oder Verschlüsselungstechniken werden gezielt auslagerungsfähige Codesequenzen identifiziert und in separate Extraktionsmodule ausgelagert. Dies erschwert das unbefugte Auslesen von Programminstruktionen aus dem Arbeitsspeicher erheblich, da kritische Codeabschnitte nicht mehr im Hauptprogramm vorliegen.

Anders als bei vielen Obfuskationstechniken, die die Lesbarkeit und Wartbarkeit des Codes beeinträchtigen können, bleibt bei diesem Ansatz die funktionale Äquivalenz des Programms vollständig erhalten. Die Extraktionsmodule werden so aufgerufen und ausgeführt, dass das Programmverhalten unverändert bleibt.

Die Erfindung nutzt bevorzugt ein Secure-Element zur Ausführung der Extraktionsmodule. Dies bietet eine zusätzliche Sicherheitsebene, die über statische Schutzmechanismen hinausgeht und eine sichere Ausführungsumgebung für kritische Codeabschnitte bereitstellt. Das Secure-Element kann in dem Prozessor integriert, über eine Schnittstelle mit der Vorrichtung verbunden oder in einer externen Recheneinheit oder Speichereinheit ausgebildet sein.

Im Unterschied zum Stand der Technik ermöglicht das Verfahren eine flexible Identifizierung und Auslagerung von Codesequenzen. Dies erlaubt eine gezielte Anpassung des Schutzniveaus für verschiedene Teile des Programms, was bei vielen bestehenden Lösungen nicht möglich ist. Zudem wird die im Hauptspeicher sichtbare Angriffsfläche des Programms deutlich reduziert, was einen effektiveren Schutz gegen Speicheranalyse-Angriffe bietet.

Ein weiterer Vorteil der Erfindung ist die Behandlung von Seiteneffekten. Das Verfahren identifiziert Seiteneffekte in der Codesequenz und erzeugt ein Kontrollflusskonstrukt, dessen Eingabewerte auf mindestens einem Ausgabeparameter des Extraktionsmoduls basieren. Das Extraktionsmodul umfasst eine Auswahlfunktion, die die Seiteneffekte repräsentiert, und das Kontrollflusskonstrukt bildet unterschiedliche Fälle der Seiteneffekte ab.

Seiteneffekte sind Auswirkungen oder Interaktionen eines Programmabschnitts, die über den lokalen Ausführungskontext hinausgehen und den Zustand des Programms oder des Systems außerhalb des unmittelbaren Funktionsbereichs beeinflussen oder von diesem abhängig sind. Seiteneffekte sind beispielsweise:
1. Zugriffe auf oder Modifikationen von Daten außerhalb des lokalen Gültigkeitsbereichs
2. Ausnahmebehandlungen und unerwartete Programmabbrüche
3. Interaktionen mit dem Betriebssystem oder der Hardware
4. Veränderungen des Kontrollflusses, die nicht lokal begrenzt sind
5. Operationen, die den vorhersehbaren Ablauf des Programms unterbrechen oder verändern können

Sie umfassen somit auch:
1. Lesen und Schreiben globaler Variablen (d.h. Verwendung von Variablen, die auch außerhalb des Scopes der zu extrahierenden Funktion verwendet werden)
2. Behandeln von Ausnahmen, wie Arithmetik, etwa Division durch Null, Aufruf von Funktionen oder Instruktionen, welche eine Ausnahme (no return function) auslösen, Input/Output-Fehler
3. Datenzugriffe: Lesen und/oder Schreiben von Speicher (Stack, RAM)
4. Interrupts: Emittieren eines Prozessorinterrupts
5. Subfunktionsaufrufe: Kontrollfluss verzweigt in andere Funktionen
6. Kontrollflussindirektion: Sprünge mit dynamischem Sprungziel

Diese Beispiele decken ein breites Spektrum von Operationen ab, die über den lokalen Ausführungskontext einer Funktion hinausgehen und somit als Seiteneffekte betrachtet werden.

Die Behandlung von Seiteneffekten kann mit zwei Methoden erfolgen, der "Localize Scope-Methode" und der "Create Control Flow Variant-Methode".

### Localize Scope (Data as parameter):

Die Technik "Localize Scope" ist eine Methode zur Verlagerung von Seiteneffekten, bei der Daten als Parameter an das Extraktionsmodul mit der Teilfunktion übergeben werden. Diese Technik dient dazu, Seiteneffekte durch die Verwendung globaler Variablen oder Variablen außerhalb des Scopes der zu isolierenden Codesequenz zu umgehen. Dazu wird der Code so angepasst, dass der Zustand von Variablen außerhalb des Scopes vor der Ausführung der extrahierten Teilfunktionalität in lokale Variablen überführt wird. Nach dem Ausführen werden diese Werte gegebenenfalls wieder in die originalen Variablen zurück überführt.

Die Gesamtheit aller transformierten (lokalen) Variablen wird in eine Parameterstruktur gepackt. Diese Struktur wird vor Ausführung der isolierten Sequenz einmal eingelesen. Nach der Ausführung werden die Werte als Ausgabeparameter in die originalen Datenbereiche zurückgeschrieben. Dies ermöglicht die Erzeugung einer deutlich längeren isolierten Sequenz. Mehr Code wird dadurch extrahierbar.

Dabei erfolgt also eine Art Transformation und Rücktransformation der Variablenzustände zwischen Lokal-Variablen und Originär-Variablen. Die Lokal-Variablen dienen als eine Art Zwischenspeicherung, auch von Zuständen. Die Originär-Variablen enthalten die alten (originären) Zustände, die bevorzugt mit geänderten und aktualisierten Zuständen überschrieben werden können. Durch diese Technik wird es möglich, Codeabschnitte zu isolieren und zu extrahieren, die sonst aufgrund ihrer Abhängigkeiten von globalen oder externen Variablen nicht ohne Weiteres ausgelagert werden könnten.

Die Technik "Create Control Flow Variant" ist eine Methode zur Verlagerung von Seiteneffekten und ermöglicht es, Seiteneffekte aus der zu isolierenden Codesequenz herauszuziehen und in der originalen Funktion, also dem Funktionsrumpf, zu behandeln.

Dabei kann ein automatisiertes Vorgehen angewandt werden, bei dem Seiteneffekte aus der zu isolierenden Sequenz extrahiert werden und eine Id-basierte Kontrollflussauswahl in der originalen Funktion hinzugefügt werden kann. Wenn die zu isolierende Sequenz eine Instruktion enthält, die eine Ausnahme auslösen würde, wird diese aus der Sequenz herausgelöst. An dieser Stelle wird eine Id mit einem für diesen Fall eindeutigen Wert gesetzt. Die Ausführung in der isolierten Sequenz wird an dieser Stelle beendet. Die Id steuert nach der Ausführung ein Kontrollflusskonstrukt in dem Funktionsrumpf, welches eine semantisch äquivalente Ausnahme auslöst.

Hierdurch werden einige Vorteile realisiert:
Die Seiteneffekte verbleiben nur in dem Funktionsrumpf. Code nach einer solchen Instruktion bleibt extrahierbar. Es werden verschiedene Varianten in dem Funktionsrumpf generiert, deren Ausführung durch die isolierte Sequenz bzw. die Teilfunktion in dem Extraktionsmodul gesteuert wird. Das Extraktionsmodul wird als Auswahlfunktion für den Kontrollfluss in dem Funktionsrumpf benutzt.

Diese Techniken ermöglichen es also, komplexere Codeabschnitte zu isolieren und auszulagern, indem potenzielle Seiteneffekte in kontrollierter Weise in der Hauptfunktion behandelt werden, während der eigentliche Programmablauf in dem Extraktionsmodul stattfindet.

Zusammenfassend bietet die Erfindung eine innovative Lösung für den Schutz von Softwareprogrammen, die über herkömmliche Obfuskations- und Verschlüsselungstechniken hinausgeht. Durch die gezielte Auslagerung kritischer Codeabschnitte, bevorzugt mit Seiteneffekten, und deren Ausführung in einer geschützten Umgebung wird ein hoher Grad an Sicherheit erreicht, während gleichzeitig die Funktionalität und Wartbarkeit des Programms erhalten bleiben.

Die Vorteile der Erfindung lassen sich wie folgt zusammenfassen:
1. Maximierung extrahierbarer Instruktionen: Durch die Anwendung von "Localize Scope" und "Create Control Flow Variant" wird die Anzahl der Instruktionen, die extrahiert werden können, erhöht.
2. Verlagerung von Seiteneffekten: Diese Techniken ermöglichen es, Seiteneffekte von den zu extrahierenden Instruktionen zu trennen, was die Extraktion erleichtert.
3. Sequenzielle Optimierung: Innerhalb einer Funktion werden zusammenhängende Sequenzen extrahierbarer Instruktionen (SeqE) identifiziert und optimiert.
4. Vergrößerung der Sequenzlänge: Durch gezielte Transformationen wird die Länge der extrahierbaren Sequenzen vergrößert, was zu einem umfangreicheren Schutz führt.
5. Flexibilität: Die Methode erlaubt eine flexible Anpassung und Optimierung für verschiedene Teile des Programms. Sie wird bevorzugt mehrfach angewendet.
6. Erhöhte Sicherheit: Durch die Extraktion größerer Codeabschnitte wird das unbefugte Auslesen und Analysieren des Programms erschwert.
7. Erhaltung der Funktionalität: Trotz der Transformationen und Extraktionen bleibt die Funktionalität des Programms erhalten.

Diese Vorteile tragen dazu bei, einen effektiveren Schutz gegen Reverse-Engineering und unbefugte Codeanalyse zu gewährleisten, während gleichzeitig die Leistungsfähigkeit und Funktionalität des Programms beibehalten werden.

Die Erfindung wird nachfolgend anhand der nachfolgenden Beschreibung und mit Bezug auf bevorzugte Ausführungsformen näher erläutert. Die hier gegebenen Beispiele sollen die durch die Patentansprüche allgemein und definierte Erfindung nicht einschränken. Es zeigen:
- Figur 1: die erfindungsgemäße Vorrichtung zum Schutz vor Beeinflussungen eines Programms;
- Figur 2: das erfindungsgemäße System mit der Vorrichtung und einem Secure-Element;
- Figur 3: ein erstes Beispiel für Pseudocode;
- Figur 4: eine Codetransformation mit der Localized Scope-Methode;
- Figur 5: den ursprünglichen Code nach Extraktion in Extraktionsmodule;
- Figur 6: ein zweites Beispiel für Pseudocode;
- Figur 7: ein Beispiel für eine Create Control Flow Variant-Transformation; und
- Figur 8: den veränderten Code nach Extraktion der Teilfunktionen in Extraktionsmodule.

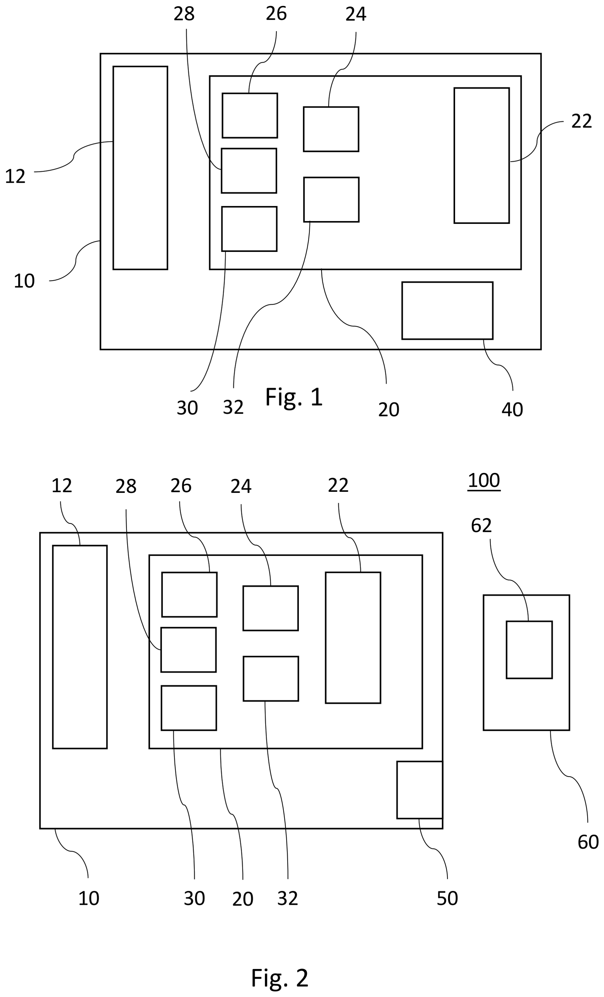

Figur 1 zeigt eine erfindungsgemäße Vorrichtung 10 zum Schutz vor Beeinflussungen eines Programms. Die Vorrichtung 10 umfasst einen Speicher 12, in dem das Programm gespeichert sein kann, und eine Prozessoreinheit 20 mit einem Arbeitsspeicher 22.

Die Vorrichtung 10 weist, bevorzugt in ihrer Prozessoreinheit 20, weitere Komponenten auf, um die Funktionen des erfindungsgemäßen Verfahrens durchführen zu können. Die Prozessoreinheit 20 hat einen Codesequenzgenerator 24, der in einer Funktion des Programms eine auslagerungsfähige Codesequenz identifiziert, und einen Extraktionsmodulgenerator 26, um ein Extraktionsmodul zu erstellen, das die Codesequenz mit einer Teilfunktion der Funktion des Programms umfasst. Die Prozessoreinheit 20 hat weiter einen Funktionsmodifikator 28, der einen Funktionsrumpf ohne die Codesequenz erstellt. Der Funktionsrumpf ist der verbleibende Rumpf der Funktion, in dem das Extraktionsmodul mit Parametern aufgerufen wird, wobei die Parameter auf Variablen der Funktion oder auf globalen Variablen des Programms basieren. Ein Parameterzuordner 30 der Prozessoreinheit 20 ordnet Ergebniswerten des Funktionsrumpfs zurückgegebene Ausgabeparameter des Extraktionsmoduls zu, wobei diese Ergebniswerte des Funktionsrumpfs das gleiche Ergebnis hervorrufen wie die Funktion des Programms.

Eine Ausführungsumgebung 40 ist bevorzugt Teil der Vorrichtung 10. Die Ausführungsumgebung 40 führt die Teilfunktion in dem Extraktionsmodul basierend auf den (Eingabe-) Parametern aus, wobei die Teilfunktion Ausgabeparameter erzeugt und an den Funktionsrumpf zurückgibt. Der Funktionsrumpf ist bevorzugt in dem Speicher 12 der Vorrichtung 10 abgelegt und wird in dem Arbeitsspeicher 22 während der Laufzeit des Programms verarbeitet.

In der hier gezeigten bevorzugten Ausführungsform umfasst die Prozessoreinheit 20 einen Seiteneffektmanager 32, um Seiteneffekte aus der identifizierten Codesequenz zu verlagern. Dabei werden globale Variablen oder Variablen der Funktion, die auch in der Codesequenz verwendet werden, identifiziert. Der Seiteneffektmanager 32 ist dazu eingerichtet, lokale Variablen zu erstellen, die den identifizierten globalen Variablen oder Funktionsvariablen entsprechen. Er ist weiter dazu ausgebildet, Verweise auf globale Variablen durch Verweise auf die entsprechenden lokalen Variablen innerhalb des Extraktionsmoduls zu ersetzen.

Figur 2 zeigt ein System 100 mit der Vorrichtung 10 aus Figur 1. Die Vorrichtung 10 weist zusätzlich ein Kommunikationsmodul 50 auf, das in Form einer drahtgebundenen oder drahtlosen Schnittstelle ausgebildet sein kann.

Das System 100 umfasst weiterhin ein Secure-Element 60, um das Extraktionsmodul des Programms mit der ausgelagerten Codesequenz auszuführen, wobei die Codesequenz eine Teilfunktion einer Funktion des Programms umfasst. Das Secure-Element 60 kann einen Prozessor 62 umfassen, um das Extraktionsmodul auszuführen. In der hier gezeigten Variante ist das Secure-Element 60, das eine sichere Ausführungsumgebung 40 darstellt, außerhalb der Vorrichtung 10 angeordnet und steht mit der Vorrichtung 10 beispielsweise über das Kommunikationsmodul 50 in Verbindung. Die Kommunikation kann über eine Schnittstelle drahtlos oder drahtgebunden erfolgen. Alternativ kann das Secure-Element 60 in der Cloud gespeichert sein oder in Form eines Prozessors 62 in einem Cloud-Speicher realisiert sein.

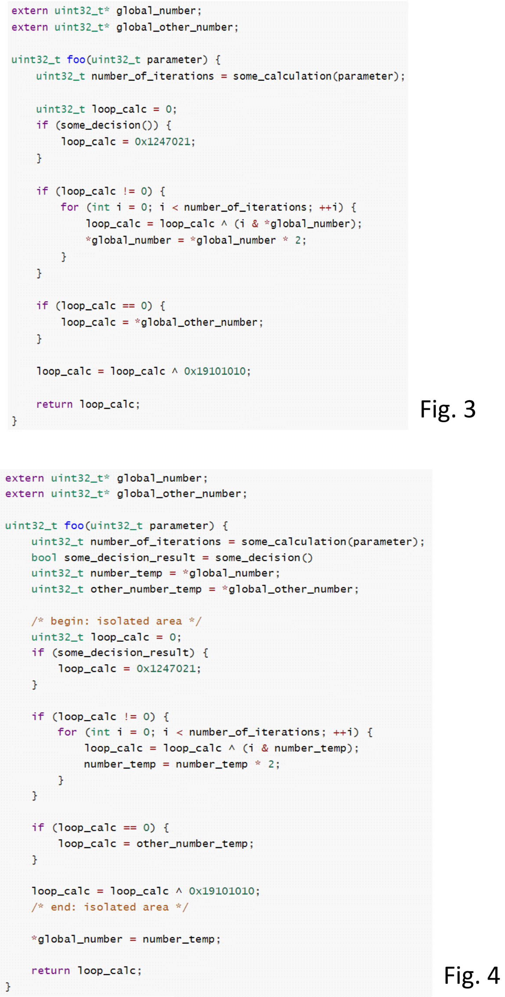

Figur 3 zeigt ein Beispiel für einen Pseudocode, in dem Seiteneffekte auftreten, wie beispielsweise ein externer Funktionsaufruf. Anhand der Figuren 3, 4 und 5 wird die Technik "Localized Scope" näher erläutert, wobei diese Technik eine Methode zur Verlagerung von Seiteneffekten ist.

Bei der Ausführung der Technik des Localized Scopes werden Änderungen von externen Strukturen durchgeführt, wie in Figur 4 gezeigt ist. Es wird ein externer Funktionsaufruf erstellt, der in dem gezeigten Beispiel "Some Decision" heißt. Innerhalb einer Schleife wird die globale Variable "Global Number" gelesen und verändert. Die Variable "Global Other Number" wird in einem Spezialfall gelesen.

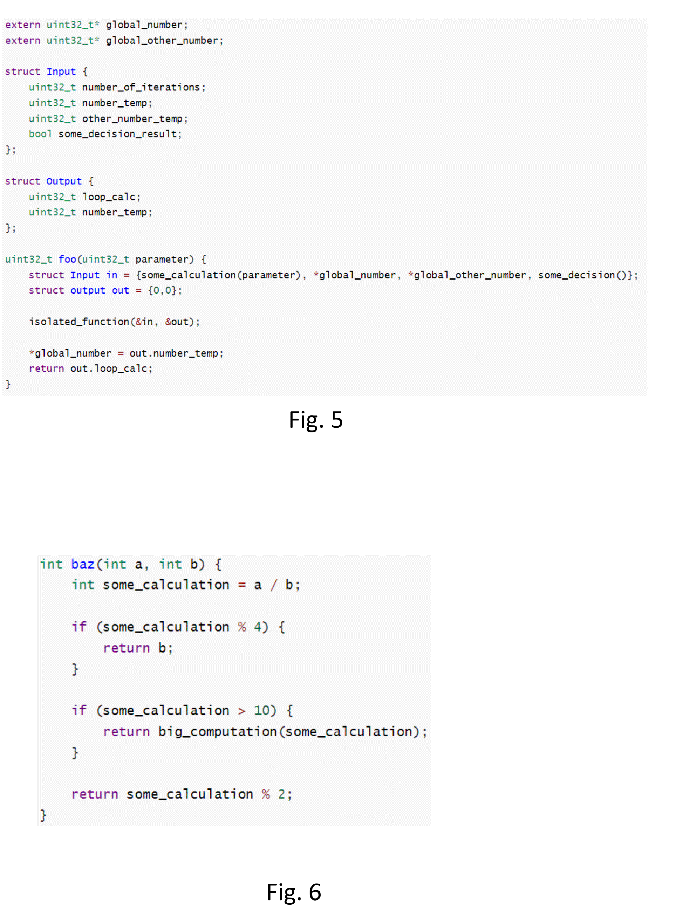

Der in Figur 4 gezeigte Programmcode, der als "Isolated Area" bezeichnet ist, wird in ein Extraktionsmodul gemäß der Erfindung ausgelagert. Hierdurch ergibt sich dann der Funktionsrumpf des Programms, wie er in Figur 5 gezeigt ist.

An die isolierte Funktion, die dem Extraktionsmodul entspricht, werden Parameter übergeben, sowie die globalen Variablen "Global Number" und "Global Other Number", die jedoch in dem Extraktionsmodul nicht verwendet werden. Erst in dem Funktionsrumpf wird der globalen Variable "Global Number" der Ausgabeparameter "NumberTemp", der in dem Extraktionsmodul verwendet wird, zugeordnet.

Figur 6 zeigt einen weiteren Pseudocode, in dem Seiteneffekte auftreten, wie eine Division durch 0, sowie der Aufruf einer externen Funktion über den Aufruf "Big Computation".

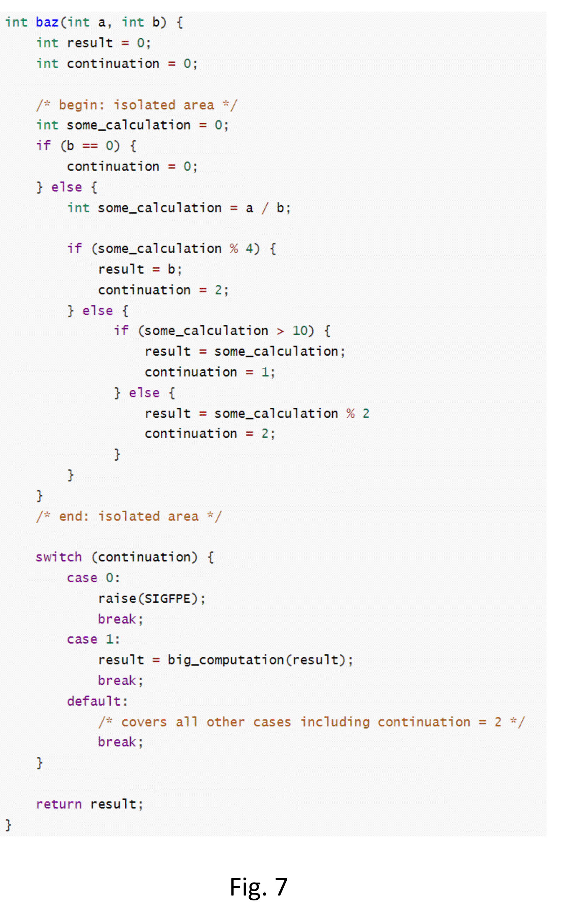

Die ausnahme-erzeugenden Anweisungen in der Codesequenz werden identifiziert und durch Kontrollflussvarianten ersetzt, wie es in Figur 7 zu erkennen ist. Das Extraktionsmodul ist auch hier als "Isolated Area" beschrieben. In dem Extraktionsmodul werden die Ausnahmen behandelt, beispielsweise die Division von 0. In diesem Fall wird der Variable "Continuation" eine 0 zugeordnet. In anderen Ausnahmesituationen wird der Variable "Continuation" der Wert 1 oder der Wert 2 zugewiesen. Der Funktionsrumpf behandelt die verschiedenen Kontrollflusskonstrukte und führt unterschiedliche Schritte aus, in Abhängigkeit des von dem Extraktionsmodul zurückgegebenen Ergebnis.

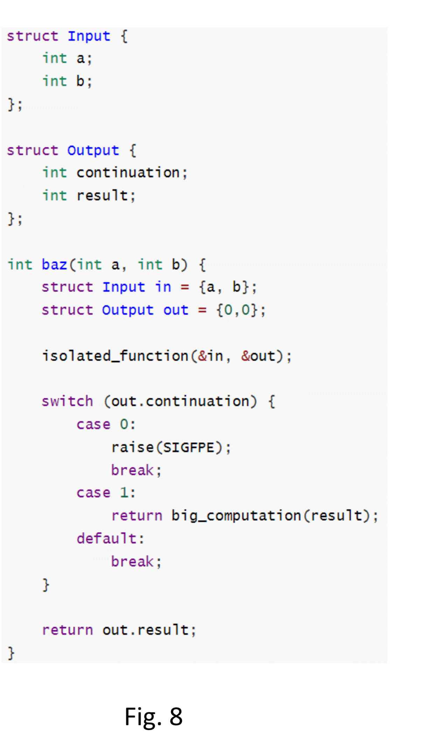

Somit lässt sich der Pseudocode in eine Programmstruktur verändern, wie sie in Figur 8 gezeigt ist. Zwar ist der Code deutlich länger als der Pseudocode gemäß Figur 6. Allerdings lässt er keine Rückschlüsse dahingehend zu, wann welche Kontrollflussstruktur angewandt wird.

Eine bevorzugte Ausführung des Verfahrens ermöglicht das Auflösen von Datenabhängigkeiten innerhalb des Programms, das Extrahieren großer Teile sensiblen Codes und das Auslagern des Codes, beispielsweise auf einen Vertrauensanker wie ein Secure-Element. Bevorzugt wird die Auslagerung längerer Sequenzen innerhalb einer Funktion durch Verlagerung von Seiteneffekten realisiert. Diese Verlagerung kann mittels der Technik "Localize Scope" und/oder mittels der Technik "Create Control Flow Variant" erfolgen. Dabei kann eine entstehende isolierte Sequenz als Auswahlfunktion für einen Kontrollfluss in dem zu schützenden Programm, einer Hostfunktion oder einer anderen Funktion des Programms genutzt werden.

Das Verfahren umfasst auch das automatische Erstellen von zu isolierenden Teilfunktionen mit Parametern für genutzte Eingabewerte des Programms und/oder Parametern für Ausgabewerte des Programms und/oder einer Funktion für die Weiterverwendung. Diese Teilfunktionen können bevorzugt die Ursachen eines Seiteneffekts repräsentieren.

Teile des Verfahrens können auf wenigstens eine geeignete Funktion des Programms angewendet werden, vorzugsweise auf eine Mehrzahl von Funktionen. Dies kann gleichzeitig, zeitversetzt und/oder nacheinander erfolgen. Zudem können Teile des Verfahrens mehrfach innerhalb einer Funktion des Programms angewendet werden, vorzugsweise mehrfach innerhalb mehrerer Funktionen des Programms.

Die Erfindung bietet ein Verfahren zur automatisierten Identifikation und Auslagerung sinnvoller Funktionen zum Schutz von geistigem Eigentum in Softwareprogrammen. Dabei werden bevorzugt folgende weiteren bevorzugten Aspekte berücksichtigt:
1. Identifikation geeigneter Funktionen: Ein Score-System kann Funktionen automatisiert basierend auf verschiedenen Kriterien klassifizieren, wie zyklomatische Komplexität, Anzahl der Instruktionen, Menge konstanter Daten, Anzahl der Basic-Blöcke, Programmierer-Annotationen und sogar Funktionsnamen.
2. Flexibilität der Analyse: Die Erfindung kann bevorzugt auf verschiedenen Ebenen angewendet werden, vom Quellcode über Intermediate-Darstellungen (z. B. LLVM) bis hin zu Assembler-Code und virtuellen Assembler-Ebenen wie Java Bytecode oder .NET Code.
3. Verlagerung von Seiteneffekten: Zwei Haupttechniken, "Localize Scope" und "Create Control Flow Variant", ermöglichen die Auslagerung längerer Sequenzen innerhalb von Funktionen durch geschickte Handhabung von Seiteneffekten.
4. Parametrisierung: Isolierte Teilfunktionen werden bevorzugt mit Parametern für Ein- und Ausgabewerte erstellt, was die Weiterverwendung und das Verursachen kontrollierter Seiteneffekte ermöglicht.
5. Skalierbarkeit: Das Verfahren kann auf mehrere, geeignete Funktionen innerhalb eines Programms angewendet und sogar mehrmals innerhalb einer einzelnen Funktion eingesetzt werden.

Damit ergeben sich weitere Vorteile:
- Flexibilität in der Anwendung auf verschiedenen Code-Ebenen
- Möglichkeit zur Ausführung extrahierter Codeteile in sicheren Umgebungen (Vertrauensanker oder virtuelle Maschinen)
- Automatisierbarkeit durch Integration in Compiler-Frameworks wie LLVM

Es bieten sich folgende beispielhafte Anwendungsmöglichkeiten und Einsatzgebiete:
- Schutz in Softwareprodukten
- Durchsetzung von Lizenzrechten und Kopierschutz
- Schaffen von sicherheitsrelevanten Anwendungen, die erhöhten Schutz vor Codeanalyse benötigen
- Integration in Entwicklungs- und Kompilierungsprozesse zur automatischen Codeextraktion und -transformation
- Nachträglicher Schutz von bereits kompiliertem Code durch Post-Processing

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Merkmale der oben skizzierten Beispiele oder Ausführungsformen können kombiniert werden, um zusätzliche Beispiele oder Ausführungsformen zu erstellen, ohne die beabsichtigte Wirkung zu verlieren. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Schnittstelle, eine Vorrichtung und ein System können teilweise oder vollständig in Hard- und/oder in Software umgesetzt sein. Bezugszeichen in den Patentansprüchen sind nicht einschränkend zu verstehen.

Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann.

Ein Computerprogramm bzw. ein Computerprogrammprodukt kann auf einem nichtflüchtigen Datenträger gespeichert/vertrieben werden, beispielsweise auf einem optischen Speicher oder auf einem Halbleiterlaufwerk (SSD). Ein Computerprogramm kann zusammen mit Hardware und/oder als Teil einer Hardware vertrieben werden, beispielsweise mittels des Internets oder mittels drahtgebundener oder drahtloser Kommunikationssysteme.

### Glossar

In der Beschreibung werden insbesondere die folgenden Begriffe verwendet, die vorzugsweise wie folgt zu verstehen sind:
Die Beschreibung führt den Begriff "auslagerungsfähige Codesequenz" ein. Darunter versteht man einen Codeabschnitt innerhalb einer Funktion des Programms, der sich für die Extraktion und Ausführung in einem separaten Modul eignet, ohne die Gesamtfunktionalität des Programms zu beeinträchtigen.

Ein "Extraktionsmodul" im Sinne der Erfindung kann ein separates Softwaremodul sein, das eine aus dem Hauptprogramm extrahierte Codesequenz enthält und in einer geschützten Umgebung, wie einem Secure-Element, ausgeführt werden kann.

Basic Block: Sequenz von Instruktionen, die bei einer kontrollflussverändernden Instruktion endet.

Blurry Box: Verfahren zur Absicherung von Code und Intellectual Property durch eine durch den Programmierer gesteuerte Auslagerung von Codeteilen in einen Vertrauensanker.

Code-Moving: Verschieben von Programmteilen in einen Vertrauensanker zur dortigen Ausführung.

CTP (Compile Time Protection): Einbettung der Schutztechnologien zur Compilierzeit in der LLVM IR.

Debugging: Instrument zur dynamischen Analyse eines Programms durch schrittweise Ausführung des Programms und zur Analyse des Speicherinhalts und Programmverhaltens.

Host Code: Programmcode, der auf der vom Angreifer kontrollierten Umgebung ausgeführt wird.

LLVM (früher Low Level Virtual Machine): Modulares Compiler-System mit einem virtuellen Befehlssatz.

LLVM IR (LLVM intermediate representation): Assembler-ähnliche architekturunabhängige Zwischensprache des LLVM compiler frameworks, aus der Programme in Maschinencode übersetzt werden können.

NP-Problem: Problem in der Komplexitätsklasse NP (Non-deterministic Polynomial Time). Probleme in dieser Komplexitätsklasse werden (im worst case) als nicht effizient lösbar angesehen (es kann zu NP-Problemen effizient lösbare Probleminstanzen geben; die Komplexitätsklasse richtet sich nach der am schwersten zu lösenden Probleminstanz, also dem worst case).

Opake Prädikate: Boolesche Ausdrücke, die für alle Variablenbelegungen den gleichen Wahrheitswert annehmen. Wird in der Obfuskation benutzt, um den Angreifer mit totem Code (d. h. Code, der niemals ausgeführt wird) zu verwirren: Das opake Prädikat wird als Bedingung einer IF-Anweisung verwendet, die somit immer in denselben Pfad mündet (immer "then" oder immer "else"). Code im anderen Pfad wird nie ausgeführt und ist damit für die Analyse des Angreifers eigentlich uninteressant, was der Angreifer aber erstmal herausfinden muss. Die Identifikation opaker Prädikate und damit von totem Code als solchen ist eine Instanziierung des SAT-Problems.

SAT-Problem (Erfüllbarkeitsproblem): Das Problem, ob ein boolescher Ausdruck erfüllbar ist, also ob es eine Variablenbelegung gibt, sodass der boolesche Ausdruck den Wahrheitswert "True" ("Wahr") annimmt. Das SAT-Problem ist NP-Vollständig, allerdings ist derzeit kein effizientes Verfahren zum Finden schwerer Probleminstanzen bekannt. Im Durchschnittsfall sind SAT-Instanzen effizient durch SAT-Solver oder SMT-Solver lösbar. Wird in der Obfuskation eingesetzt in Form von opaken Prädikaten.

SAT-Solver: Tools, die SAT-Probleminstanzen automatisiert lösen, sofern es keine schweren, sondern effizient lösbare Instanzen sind.

SMT-Problem (SMT = Satisfiability Modulo Theories): Das Problem, ob eine mathematische Formel erfüllbar ist. Dies kann als Erweiterung des SAT-Problems gesehen werden.

SMT-Solver: Tools, die effizient lösbare SMT-Probleminstanzen automatisiert lösen.

Zyklomatische Komplexität: Softwaremetrik, mit der die Komplexität eines Softwaremoduls gemessen werden kann (z. B. Anzahl Pfade im Kontrollflussgraphen).

### Bezugszeichenliste

- 10: Vorrichtung
- 12: Speicher
- 20: Prozessoreinheit
- 22: Arbeitsspeicher
- 24: Codesequenzgenerator
- 26: Extraktionsmodulgenerator
- 28: Funktionsmodifikator
- 30: Parameterzuordner
- 32: Seiteneffektmanager
- 40: Ausführungsumgebung
- 50: Kommunikationsmodul
- 60: Secure-Element
- 62: Prozessor
- 100: System

## Patentansprüche

1. Verfahren zum Schutz vor Beeinflussungen eines Programms mit Maßnahmen zum Unterbinden von Auslesen von Instruktionen des geschützten Programms zur Laufzeit aus einem Arbeitsspeicher (22) eines Prozessors (62), umfassend:
Identifizieren einer auslagerungsfähigen Codesequenz in einer Funktion des Programms;
Erstellen eines Extraktionsmoduls umfassend die Codesequenz mit einer Teilfunktion der Funktion;
Erstellen eines Funktionsrumpfs ohne die Codesequenz, wobei das Extraktionsmodul in dem Funktionsrumpf mit Parametern aufgerufen wird, die auf Variablen der Funktion oder auf globalen Variablen des Programms basieren;
Ausführen der Teilfunktion in dem Extraktionsmodul basierend auf den Parametern, wobei die Teilfunktion Ausgabeparameter an den Funktionsrumpf zurückgibt;
Zuordnen der zurückgegebenen Ausgabeparameter des Extraktionsmoduls zu Ergebniswerten des Funktionsrumpfs;
wobei
die Ergebniswerte des Funktionsrumpfs das gleiche Ergebnis hervorrufen wie die Funktion.

2. Verfahren nach Anspruch 1, weiter umfassend:
Identifizieren von globalen Variablen in dem Programm, die ausschließlich in der Funktion und/oder der Codesequenz in dem Extraktionsmodul verwendet werden;
Auflösen von Datenabhängigkeiten innerhalb der Funktion des Programms durch Definieren geeigneter lokaler Variablen; und
Zuordnen der erkannten globalen Variablen zu den lokalen Variablen.

3. Verfahren nach Anspruch 2, weiter umfassend:
Erstellen von lokalen Variablen, die den identifizierten globalen Variablen entsprechen; und
Ersetzen von Verweisen auf die globalen Variablen durch Verweise auf die entsprechenden lokalen Variablen innerhalb des Extraktionsmoduls.

4. Verfahren nach einem der Ansprüche 1 bis 3, weiter umfassend:
Identifizieren von ausnahme-erzeugenden Anweisungen in der Codesequenz;
Ersetzen der ausnahme-erzeugenden Anweisungen durch Kontrollflussvarianten; und
Implementieren einer entsprechenden Ausnahmebehandlung in dem Funktionsrumpf.

5. Verfahren nach einem der Ansprüche 1 bis 4, **gekennzeichnet durch** die folgenden Schritte:
Identifizieren von Seiteneffekten in der Codesequenz;
Erzeugen eines Kontrollflusskonstrukts, dessen Eingabewerte auf wenigstens einem Ausgabeparameter des Extraktionsmoduls basieren, wobei das Extraktionsmodul eine Auswahlfunktion umfasst, die die Seiteneffekte repräsentiert, und wobei das Kontrollflusskonstrukt unterschiedliche Fälle der Seiteneffekte abbildet.

6. Verfahren nach einem der vorhergehenden Ansprüche, **dadurch gekennzeichnet, dass** die Seiteneffekte die Behandlung von arithmetischen Ausnahmen, das Lesen und Schreiben globaler Variablen, das Aufrufen von Funktionen, die eine Ausnahme auslösen, wie eine No-return-Funktion, das Erzeugen von Datenzugriffen auf Speicher (12), das Hervorrufen von Prozessorinterrupts, das Verzweigen in andere Funktionen oder das Springen mit dynamischen Sprungzielen umfassen.

7. Verfahren nach Anspruch 5 oder 6, **dadurch gekennzeichnet, dass** die Seiteneffekte in den Funktionsrumpf verschoben werden.

8. Verfahren nach einem der vorhergehenden Ansprüche, weiter umfassend:
Erstellen einer Parameterstruktur zum Übergeben von Daten zwischen dem Funktionsrumpf und dem Extraktionsmodul.

9. Verfahren nach Anspruch 8, wobei die Parameterstruktur umfasst:
Eingabeparameter, die den Zustand von Variablen der Funktion oder globaler Variablen vor der Ausführung des Extraktionsmoduls repräsentieren; und
Ausgabeparameter zum Zurückgeben modifizierter lokaler Variablen nach der Ausführung des Extraktionsmoduls,
wobei die Eingabeparameter in dem Extraktionsmodul lokalen Variablen zugeordnet werden.

10. Verfahren nach einem der Ansprüche 1 bis 9, weiter umfassend:
Extrahieren mehrerer Codesequenzen aus einer einzelnen Funktion; und
Erstellen mehrerer Extraktionsmodule für die einzelne Funktion.

11. Verfahren nach einem der vorhergehenden Ansprüche, **gekennzeichnet durch** den folgenden Schritt:
Zuordnen von Variablen der Funktion oder globalen Variablen des Programms an lokale Variablen derart, dass die Variablen der Funktion oder globale Variablen innerhalb des Extraktionsmoduls unverändert bleiben oder nicht verarbeitet werden.

12. Verfahren nach einem der vorhergehenden Ansprüche, **dadurch gekennzeichnet, dass** die Variablen der Funktion oder globale Variablen nach Aufruf des Extraktionsmoduls mit einzelnen Ausgabeparametern des Extraktionsmoduls überschrieben werden.

13. Verfahren nach einem der vorhergehenden Ansprüche, **gekennzeichnet durch** den folgenden Schritt:
Ausführen des Extraktionsmoduls in einem Secure-Element (60) oder in einem sicheren Element oder in einem Vertrauensanker oder in einem sicheren Bereich des Prozessors (62), der bevorzugt von außen unzugänglich ist.

14. Vorrichtung zum Schutz vor Beeinflussungen eines Programms mit Maßnahmen zum Unterbinden von Auslesen von Instruktionen des geschützten Programms zur Laufzeit aus einem Arbeitsspeicher (22) eines Prozessors (62), umfassend einen Speicher (12), eine Prozessoreinheit (20) mit Arbeitsspeicher (22) und Prozessor (62), wobei die Vorrichtung (10) dazu ausgebildet ist, das Verfahren nach einem der vorhergehenden Ansprüche auszuführen.

15. Vorrichtung nach Anspruch 15, weiter umfassend:
einen Codesequenzgenerator (24), um eine auslagerungsfähige Codesequenz in einer Funktion des Programms zu identifizieren;
einen Extraktionsmodulgenerator (26) zum Erstellen eines Extraktionsmoduls, das die Codesequenz mit einer Teilfunktion der Funktion umfasst;
einen Funktionsmodifikator (28) zum Erstellen eines Funktionsrumpfs ohne die Codesequenz, wobei das Extraktionsmodul in dem Funktionsrumpf mit Eingangsparametern aufgerufen wird, die auf Variablen der Funktion oder auf globalen Variablen des Programms basieren;
eine Ausführungsumgebung (40) zum Ausführen der Teilfunktion in dem Extraktionsmodul basierend auf den Eingabeparametern, wobei die Teilfunktion Ausgabeparameter an den Funktionsrumpf zurückgibt;
einen Parameterzuordner (30) zum Zuordnen der zurückgegebenen Ausgabeparameter des Extraktionsmoduls zu Ergebniswerten des Funktionsrumpfs;
wobei die Ergebniswerte des Funktionsrumpfs das gleiche Ergebnis hervorrufen wie die Funktion; und
wobei die Ausführungsumgebung (40) bevorzugt eine sichere Umgebung ist, um das Extraktionsmodul auszuführen.

16. Vorrichtung nach Anspruch 15 oder 16, umfassend
einen Seiteneffektmanager (32) zum Verlagern von Seiteneffekten aus der identifizierten Codesequenz,
wobei der Seiteneffektmanager (32) konfiguriert ist zum:
Identifizieren von globalen Variablen, die in der Codesequenz verwendet werden;
Erstellen von lokalen Variablen, die den identifizierten globalen Variablen entsprechen; und
Ersetzen von Verweisen auf die globalen Variablen durch Verweise auf die entsprechenden lokalen Variablen innerhalb des Extraktionsmoduls.

17. Vorrichtung nach Anspruch 17, wobei der Seiteneffektmanager (32) weiter konfiguriert ist zum:
Identifizieren von ausnahme-erzeugenden Anweisungen in der Codesequenz;
Ersetzen der ausnahme-erzeugenden Anweisungen durch Kontrollflussvarianten; und
Implementieren einer entsprechenden Ausnahmebehandlung in dem Funktionsrumpf.

18. System zum Schutz vor Beeinflussungen eines Programms mit Maßnahmen zum Unterbinden von Auslesen von Instruktionen des geschützten Programms zur Laufzeit aus einem Arbeitsspeicher (22) eines Prozessors, umfassend eine Vorrichtung (10) nach einem der Ansprüche 15 bis 18 und ein Secure-Element (60) zum Ausführen des Extraktionsmoduls des Programms mit einer ausgelagerten Codesequenz, die eine Teilfunktion einer Funktion des Programms umfasst.

19. System nach Anspruch 19, **dadurch gekennzeichnet, dass** das Secure-Element (60) in dem Prozessor integriert ist und/oder via einer Schnittstelle mit der Vorrichtung (10) verbunden ist und/oder via eines Kommunikationsmoduls (50) in einer externen Recheneinheit oder Speichereinheit ausgebildet ist, wobei die Recheneinheit oder Speichereinheit in der Cloud verwirklicht sein kann und das Kommunikationsmodul (50) eine Schnittstelle umfasst.

20. System nach einem der Ansprüche 19 bis 20, wobei ein Codesequenz-Extraktor konfiguriert ist zum Auswählen von Funktionen für eine Codesequenz-Extraktion basierend auf einem Klassifikationswert; wobei der Klassifikationswert auf mindestens einem der folgenden Kriterien basiert: zyklomatische Komplexität, Anzahl der Anweisungen, Menge an konstanten Daten, Anzahl der Grundblöcke oder Funktionsname.

21. Computerprogrammprodukt umfassend Befehle, die bei der Ausführung des Programms durch einen Computer diesen veranlassen, die Schritte des Verfahrens nach einem der vorhergehenden Ansprüche 1 bis 14 auszuführen.
